Europäisches Patentamt

European Patent Office

Office européen des brevets

(11) Publication number: 0 347 514
A1

# EUROPEAN PATENT APPLICATION

(21) Application number: 88850228.3

(22) Date of filing: 23.06.88

(51) Int. Cl.4: **F16L 5/02** , **H02G 3/22**

(43) Date of publication of application:
**27.12.89 Bulletin 89/52**

(84) Designated Contracting States:
**AT BE CH DE ES FR GB GR IT LI NL SE**

(71) Applicant: **Farex A/S**

**N-2043 Lindeberg(NO)**

(72) Inventor: **Jelbring, Per-Erik**
**Uddbyvägen 8 A**
**S-135 55 Tyresö(SE)**

(74) Representative: **Roth, Ernst Adolf Michael et al**
**GÖTEBORGS PATENTBYRA AB Box 5005**
**S-402 21 Göteborg(SE)**

(54) **A method for providing through a building part a fire proof inlet.**

(57) A method for providing through a building part, e.g. a wall, a fire proof inlet for inlet members (15), such as tubes, ducts, cables or the like, whereby in close vicinity to the wall is provided at least one air-conditioning unit (14) or the like, which forms part of an installation system, serving rooms situated on both sides of the wall, whereby in a hole (24) made in the wall (11) is fitted a sealing block (25) incorporating at least one mineral wool pane, in which is made or are previously made holes for fitting said inlet members (15), and where the joints between the inlet members (15) and the mineral wool pane (25), and between this and the building part (11) are sealed off by means of a filler, which expands when heated, wherein the outer exposed surfaces of the mineral wool pane and the inlet elements (15) are painted with a fire protective paint, which expands when heated, whereby the inlet elements on both sides of the wall are painted to an adequate length as measured from the mineral wool pane, and which painted inlet elements (15) or their extensions extend into the air-conditioning unit (14).

# FIG 1

The present invention refers to a method for providing through a building part, e.g. a wall, a fire proof inlet for inlet members, such as tubes, ducts, cables or the like, whereby in close vicinity to the wall is provided at least one air-conditioning unit or the like, which forms part of an installation system, serving rooms situated on both sides of the wall, whereby in a hole made in the wall is fitted a sealing block incorporating at least one mineral wool pane, in which is made or are previously made holes for fitting said inlet members, and where the joints between the inlet members and the mineral wool pane, and between this and the building part are sealed off by means of a filler, which expands when heated.

## BACKGROUND OF THE INVENTION

For protection against spreading fire between fire cells via ventilating ducts it is today demanded that the ducts are insulated to a certain thickness along a prescribed length on both sides of the wall inlet. The thickness and the extent of the insulation are prescribed in the regulations about protection against break out and spreading of fire and they are dependent on the fire resistance class in which said building part is placed, i.e. for how long period of time the fire separating function of the building part shall be maintained. The dimension of the duct and the type of room, i.e. if it is e.g. an office, a workshop, a restaurant kitchen or the like is thereby also of importance. In fire class A60 (the fire separating function shall be maintained for 60 minutes) the extent of the insulation must be at least 1,0 meter on both sides of the fire wall.

For different reasons it is often desirable, or it is for space reasons necessary to locate a member forming part of the installation system, e.g. an air-conditioning unit, so close to the fire cell limiting intermediate wall, that the above-mentioned fire directions as to the extent of the insulation in the longitudinal direction of the ducts can not be fulfilled. In such a case it has therefore been necessary to let the duct terminate at the fire wall and provide the supply to the room on the other side of the fire wall in another manner, which of course causes an extensive increase in costs for duct and for conduit laying.

In view of different user requirements it nowadays occur that new buildings are erected without intermediate walls and that the heating system is mounted in a module system. Not until then, when tenants have been obtained, the locations of the intermediate walls are decided. This building method thus results in that it must be possible to subordinate the erection of the intermediate walls to the earlier installation of ducts, tubes, cables etcetera, and not the contrary, which is now the case.

## PURPOSE AND MOST ESSENTIAL FEATURES OF THE INVENTION

The purpose of the present invention is to provide a method for producing a fire proof wall inlet, which does not require any further free space on each side of the fire wall, which does not require any adaptation of the lining, which within the scope of the module system gives unlimited flexibility in the disposition of rooms and fire cells, which makes possible a duct laying between two fire cells without fulfilling the demand for insulation in the longitudinal direction of the duct, and which wall inlet can be made on site or by means of prefabricated elements. These tasks have been solved in that the outer exposed surfaces of the mineral wool pane and the inlet element are painted with a fire protective paint, which expands when heated, whereby the inlet elements on both sides of the wall are painted to an adequate length as measured from the mineral wool pane, and which painted inlet elements or their extensions extend into the air-conditioning unit.

## DESCRIPTION OF THE DRAWINGS

The invention hereinafter will be further described in form of two embodiments with reference to the attached drawings.

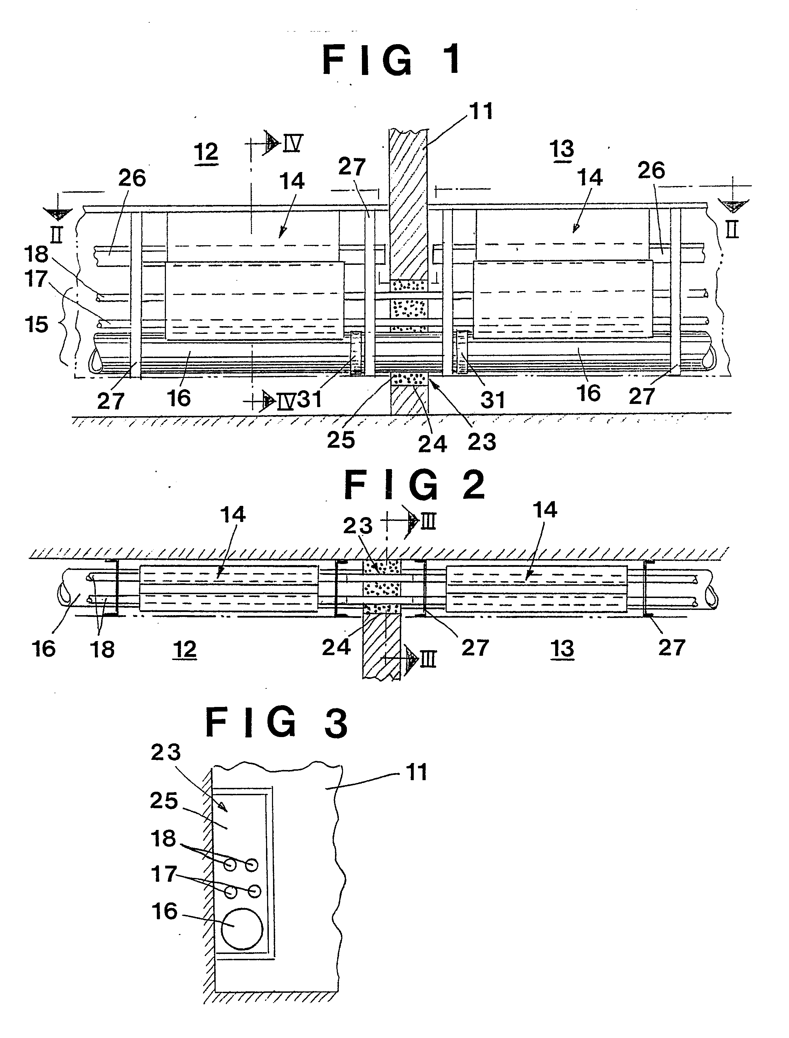

Fig. 1 shows a section through an intermediate fire wall adjoining an outer wall and equipped with the wall inlet according to the invention.

Fig. 2 is a section along line II-II in Fig. 1.

Fig. 3 is a section along line III-III in Fig. 2, and

Fig. 4 is a section along line IV-IV in Fig. 1.

Fig. 5 shows in perspective a prefabricated sealing block in accordance with the invention.

## DESCRIPTION OF EMBODIMENTS

In the drawing 11 designates a fire wall, i.e. an intermediate wall between two rooms 12 and 13, in which in close vicinity to said intermediate wall is arranged one air-conditioning unit 14 each, which are connected to common inlet elements 15 comprising an air duct 16, a supply conduit and a return conduit 17 for a heat absorbing medium and a supply conduit and a return conduit 18 for a heat emitting medium. In each air-conditioning unit 14 is provided flanged batteries 19 and 20 connected to said pipe conduits 17 and 18. The batteries 19 and 20 are located one on each side of a primary air nozzle 21, in which is provided a damper 22, regulating the air flow through the unit.

The wall inlet 23 has been produced in that a hole 24 has been made in the existing wall 11, in which hole is fitted a sealing block 25, which incorporates at least one mineral wool pane 28 of high density, e.g. 150 kg/m$^3$. Holes for the inlet elements 15 have been made in the mineral wool pane 28, whereby further recesses, joints or cavities in the mineral wool pane have been filled with loose mineral wool. The joints, as well between the inlet elements 15 and the mineral wool pane 28 as between this and the wall 11, is sealed with a filler, which when heated expands and forms an insulation.

Due to the type of wall, e.g. a wall of gypsum panes, it may be necessary to limit the wall inlet 23 with interior side walls. The exposed sides of the mineral wool panes 25 are painted with a fire protective paint, that expands when heated, and so are the inlet elements 15 situated on both sides of the wall 11, to a length of about one meter, if the wall inlet shall fulfil the demands according to fire resistance class A60. This means that at least the air ducts 16 of the air-conditioning unit 14, but possibly also the media pipes 17 and 18 and electric conduits, which have been led through the wall inlets, must be painted with said fire protective paint in order to fulfil the regulations about protection against break out and spreading of fire and combustion gas.

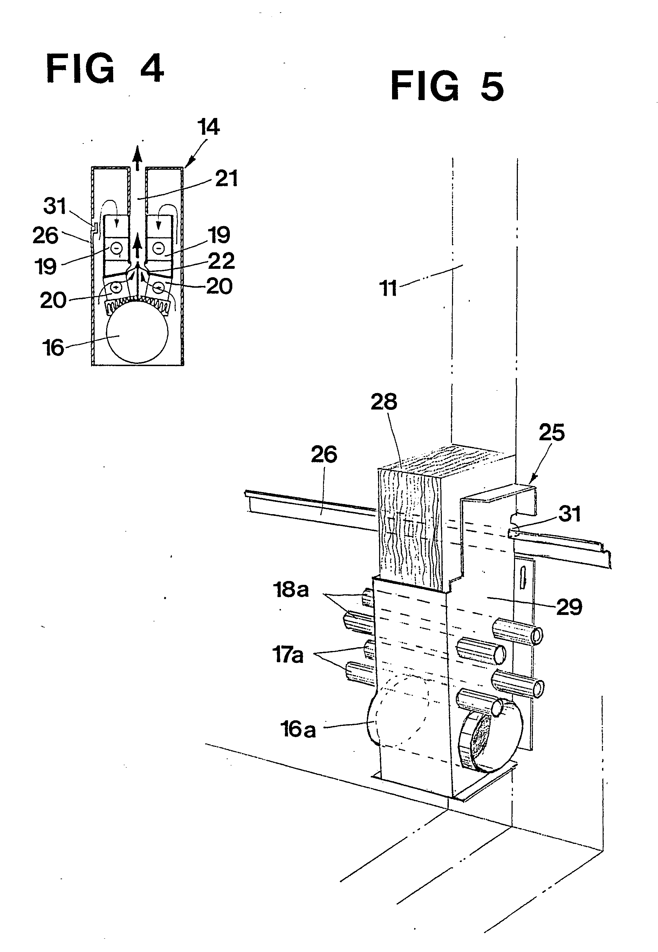

In new building it may be appropriate first to install the air-conditioning units, e.g. against an outer wall and first then, in accordance with wishes from the tenants, decide where the intermediate walls shall be located. In such case the mounting rail 26, which carries the air-conditioning units, must also pass through the wall inlet 23. In this case the sealing block 25 is preferably a prefabricated block - see Fig. 5 - preferably equipped with similar side gables 29 as the side gables 27 of the air-conditioning units, and in which are provided suspending hooks 30, which can be hooked on the mounting rail 26. In this manner the prefabricated sealing block 25 may be easily mounted, i.e be hooked on the mounting rail and it will then be in correct position in relation to the duct and pipe connections for the air-conditioning units. The attachment of the sealing block 25 to the intermediate wall and to the outer wall is preferably effected by means of a silicon glue or a similar fire-retardant glue. The sealing block 25 is preferably provided with prepared connecting sockets 16a, 17a, 18a, which in a conventional manner are connected to duct 16 and pipes 17, 18, resp. With the prefabricated sealing block in position the intermediate wall 11 may be erected in close vicinity thereof. The surfaces of the sealing block 25 facing the intermediate wall are also painted with above mentioned fire protective paint.

If the air duct 16 and the connecting socket 16a are joined in conventional manner this ventilating duct will not fulfil the fire protection demands, as the seal and the shrinking plastic connection are damaged by the fire. According to the invention the joint seal 31 therefore is constituted by a silicon impreg nated glass fiber cloth, which is wound over the joint ends, upon which have been applied a silicon glue. The joint seal is thereupon secured by means of two hose clamps, one over the end of each joint duct.

The invention is not limited to the embodiments described above, but a plurality of variants are possible within the scope of the claims.

## Claims

1. A method for providing through a building part, e.g. a wall, a fire proof inlet for inlet members (15), such as tubes, ducts, cables or the like, whereby in close vicinity to the wall is provided at least one air-conditioning unit (14) or the like, which forms part of an installation system, serving rooms situated on both sides of the wall, whereby in a hole (24) made in the wall (11) is fitted a sealing block (25) incorporating at least one mineral wool pane, in which is made or are previously made holes for fitting said inlet members (15), and where the joints between the inlet members (15) and the mineral wool pane (25), and between this and the building part (11) are sealed off by means of a filler, which expands when heated,
**characterized therein,**
that the outer exposed surfaces of the mineral wool pane and the inlet elements (15) are painted with a fire protective paint, which expands when heated, whereby the inlet elements on both sides of the wall are painted to an adequate length as measured from the mineral wool pane, and which painted inlet elements (15) or their extensions extend into the air-conditioning unit (14).

2. A method as claimed in claim 1,
**characterized therein,**
that the sealing block (25), which is a prefabricated unit, is mounted on a suspending rail common for the air-conditioning unit (14) or the like and extending through the hole (24) in the building part (11), and that the sealing block (25) is connected with, e.g. glued with a silicon glue to a wall adjoining to the building part (11).

3. A method as claimed in claim 2,
**characterized therein,**
that the duct inlet (16a) in the sealing block (25) is connected to the air duct (16) of the air-conditioning unit by means of a joint seal (31) consisting of a silicon impregnated glass fiber cloth wound on and about the joint ends, and that the joint seal is secured by two hose clamps arranged one about each joint end.

# F I G 1

# F I G 2

# F I G 3

# FIG 4

# FIG 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 600 356 (ETS. DARRAS ET JOUANIN) <br> * figure 1; abstract * <br> --- | 1 | F 16 L 5/02 <br> H 02 G 3/22 |
| A | EP-A-0 225 107 (MINNESOTA MININO AND MANUFACTURING) <br> * figure 1; claim 1 * <br> --- | 1 | |
| A | DE-U-8 026 442 (NEUWALZWERK BETTERMANN) <br> * claims 1 and 6; figure * <br> --- | 1,2 | |
| A | US-A-4 093 818 (THWAITES et al.) <br> ----- | | |

TECHNICAL FIELDS SEARCHED (Int. Cl.4)

F 16 L 5/00
H 02 G 3/00

The present search report has been drawn up for all claims

| Place of search | Date of completion of the search | Examiner |
|---|---|---|
| BERLIN | 12-02-1989 | SCHAEFFLER C.A.A. |